# EUROPEAN PATENT SPECIFICATION

(11) **EP 2 641 449 B1**
(45) Date of publication and mention of the grant of the patent: **16.09.2020**
(21) Application number: 11841258.4
(22) Date of filing: 15.11.2011
(51) Int. Cl.: G06F 21/60, H04L 29/06, H04W 12/08, H04W 12/00

(54) **CONTROLLING DATA TRANSFER ON MOBILE DEVICES**
STEUERUNG EINER DATENÜBERTRAGUNG AUF MOBILEN GERÄTEN
CONTRÔLE DE TRANSFERT DE DONNÉES SUR DES DISPOSITIFS MOBILES

(30) Priority: 15.11.2010 US 413931 P
(43) Date of publication of application: 25.09.2013
(73) Proprietor: BlackBerry Limited, Waterloo, ON N2K 0A7 (CA)
(72) Inventor: TU, Van Quy, Kitchener, Ontario N2E 4L5 (CA); ADAMS, Neil Patrick, Waterloo Ontario N2L 3W8 (CA); TAKACS, Kristof, Waterloo Ontario N2L 3W8 (CA); FARRAKHA, Ahmed Mohamed, Waterloo Ontario N2L 3L3 (CA); HARAMATI, Yaniv, Delta, British Columbia V4C 1L7 (CA)
(74) Representative: Gill Jennings & Every LLP
(86) International application number: PCT/CA2011/050707
(87) International publication number: WO 2012/065264

(56) References cited:
- EP-A1- 1 624 428
- WO-A1-96/25828
- WO-A1-2005/107144
- US-A1- 2006 168 395
- US-A1- 2008 028 442
- US-B1- 7 246 374

## Description

### BACKGROUND

This document relates to wireless communications in wireless communication systems.

Mobile devices are used to access a variety of services. For example, mobile device users may access the Internet, corporate e-mail accounts, social networks, and other types of services through their mobile device. Mobile devices may communicate over various types of networks, including wireless telecommunication networks, wireless data networks, and in some cases mobile devices may communicate over wired connections.

US2008/0028442 discloses a system for performing trusted copy and paste operations between a source application and a target application.

US 7,246,374 B1 discloses a system in which users can create multiple different desktops for themselves and easily switch between these desktops. These multiple desktops are "walled off' from one another, limiting the ability of processes and other subjects in one desktop from accessing objects, such as data files or other processes, in another desktop. According to one aspect, each time a process is launched it is associated with the desktop that it is launched in. Similarly, objects, such as data files or resources, are associated with the same desktop as the process that created them. The operating system allows a process to access only those objects that are either associated with the same desktop as the process or associated with no desktop.

WO 2005/107144 A1 discloses a system, method, and apparatus for managing data transfers between a secure location and a less secure location based on data transfer settings established by an administrator and according to security related aspects and business policy requirements. A data transfer checker apparatus stored and operating on a wireless mobile device retrieves data transfer settings to determine if requested data to be transferred from a first location to a second location is to be performed.

### BRIEF DESCRIPTION OF THE DRAWINGS

FIG. 1 shows an example of a wireless communication system.
FIG. 2 shows an example of a mobile device architecture.
FIG. 3 shows an example of a data transfer technique.
FIG. 4 shows an example of a data transfer permission determination technique.
FIG. 5 shows an example of a corporate data server system providing one or more data transfer settings to a mobile device.
FIG. 6 shows an example of a data transfer management architecture.
FIG. 7 shows an example of a clipboard utility based on a data transfer management architecture.

Like reference numbers and designations in the various drawings indicate like elements.

### SUMMARY OF THE INVENTION

In a first aspect, the invention provides a method as set out in appended claim 1.

In a second aspect, the invention provides a device as set out in appended claim 10.

In a third aspect, the invention provides a computer program product as set out in appended claim 16.

Optional features of the invention are set out in the appended dependent claims.

### DETAILED DESCRIPTION

Mobile device users often use a single mobile device for multiple different purposes and for managing various types of information from multiple different sources. For example, corporate employees sometimes use personally-owned mobile devices to access their corporate e-mail accounts. Similarly, some employees use corporate-owned mobile devices for personal use, such as accessing one or more personal e-mail accounts, social network sites, or taking pictures using a mobile device's camera. As such, personally-owned or corporate-owned mobile devices typically store personal data as well as sensitive corporate data. In other examples, a single mobile device may be used in connection with one or more enterprises such as businesses, schools, groups, or government agencies to manage multiple different types of information. Thus, although certain examples are discussed in the context of corporate and personal data, various additional categories of data may be managed on a mobile device.

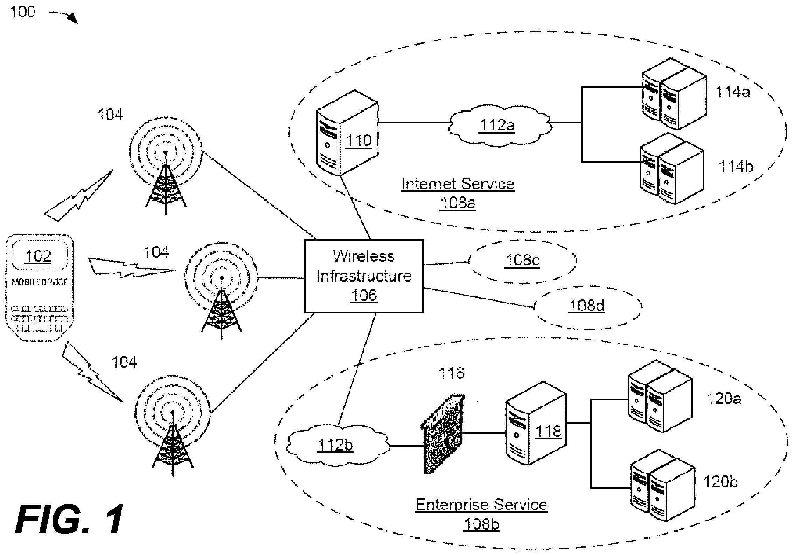

FIG. 1 shows an example of a wireless communication system. A wireless communication system 100 includes a mobile device 102 that is configured to communicate with multiple different data service systems 108a, 108b, 108c, 108d (collectively "data service systems 108"). In the example shown, the mobile device 102 is configured to communicate with an Internet service system 108a, an enterprise service system 108b, and two other example data service systems 108c, 108d. The Internet service system 108a may include, for example, a BLACKBERRY® Internet Service (BIS) system; the enterprise service system 108b may include, for example, a BLACKBERRY® Enterprise Service (BES) system; and the other data service systems 108c, 108d may include one or more server systems that provide data services. Generally, a mobile device may be configured to communicate with additional or fewer data service systems. Data associated with each of the data service systems 108 can be stored in an erasable persistent memory on the mobile device 102.

The mobile device 102 may communicate with the data service systems 108 through one or more wireless networks 104. The wireless communication system 100 includes one or more mobile devices 120. Various examples of mobile devices in the wireless communication system 100 include smart phones such as BLACKBERRY® devices, personal digital assistants (PDAs), portable media players, laptops configured with a wireless interface, notebooks, and tablets.

The mobile device 102 communicates with the wireless networks 104 via one or more radio frequency signals. The wireless networks 104 may include wireless telecommunication networks, wireless data networks, or a combination thereof. The wireless networks 104 may include one or more local, regional, national, or global networks. The wireless networks 104 may include one or more cellular networks. For example, a cellular network may include one or more base stations. The mobile device 102 can use one or more different wireless technologies such as orthogonal frequency-division multiplexing (OFDM) or code division multiple access (CDMA) based technologies for communications. The wireless networks 104 may utilize one or more communication protocol standards such as Long-Term Evolution (LTE), Universal Mobile Telecommunications System (UMTS), CDMA2000 1x, or Worldwide Interoperability for Microwave Access (WiMAX).

The wireless infrastructure 106 provides a link between the data service systems 108 and wireless networks 104. The wireless infrastructure 106 may determine the most likely network for locating a given mobile device and track the mobile device as it roams between geographical regions and/or networks. Messages and other data may be delivered to the client mobile device 102 via wireless transmission, typically at a radio frequency (RF), from a base station in the wireless network 104 to the client mobile device 102. The mobile device 102 may also receive data by other means, for example through a direct connection to a port provided on the mobile device 102, such as a Universal Serial Bus (USB) link.

The Internet service system 108a includes a domain server 110, a network 112a, servers 114a, 114b, and may include other features in various implementations. An example of an Internet service system 108a is a BIS system. Additional and/or different types of Internet service systems may be used. The domain server 110 provides an interface between the wireless infrastructure 106 and the servers 114a, 114b. The domain server 110 may receive data from the mobile device 102 and route the data to an appropriate location through the network 112a. The network 112a may include any suitable data network, for example, the Internet. The domain server 110 may include various application programming interfaces (APIs) that communicate with computer programs and/or data services running on the servers 114a, 114b. The servers 114a, 114b may include web servers, e-mail servers, messaging servers, application servers, databases, and/or other types of servers that can communicate over the data network 112a. For example, the servers 114a, 114b may include one or more web servers that implement a web site having content for rendering on mobile devices. Two servers 114a, 114b are shown in FIG. 1, but generally an Internet service system may include any number of servers and/or server clusters, which may include servers distributed in multiple locations.

A user of the mobile device 102 may access personal data and/or services through an Internet service system. Typically, a mobile device 102 can have access to multiple different Internet service systems, and each of the Internet service systems may be associated with a different service provider. For example, an Internet-based e-mail service provider may communicate with mobile devices through the Internet service system 108a. Other types of service providers that may utilize an Internet service system 108a include social network service providers, Internet search service providers (e.g., search engines), Internet vendors and retailers, software application services, and/or any other types of service providers that deliver content to mobile devices. Each service provider may have its own Internet service system. Services provided by the Internet service system 108a can be configured based on the carrier. As a specific example, when the Internet service system 108a provides Internet-based e-mail service for wireless device subscribers, one or more of the servers 114a, 114b may direct e-mail and/or e-mail related data to the mobile device 102 over the wireless network 104. In such examples, e-mail services are directed to the mobile device 102 so that the subscriber can send, receive, forward, and reply to messages wirelessly.

The enterprise service system 108b includes a network 112b, a domain server 118 and servers 120a, 120b behind a firewall 116, and may include other features in various implementations. An example of an enterprise service system is a BES system. Additional and/or different types of enterprise service systems may be used. In some examples, the enterprise service system 108b and/or the enterprise services provided by the system 108b are described in the context of a corporate enterprise. Enterprise service systems may generally be used by any type of entity to provide remote mobile device access to the entity's secure data. For example, enterprise service systems may be used by any type of business, non-profit, educational, private, public, governmental and/or other entity.

Generally, the enterprise service system 108b provides the mobile device 102 secure access to sensitive data and/or services behind the firewall 116. The network 112b provides data communication between the less secure wireless infrastructure 106 and a secure zone behind the firewall 116. The network 112b may include any suitable data network, for example, the Internet. All data communicated from the enterprise service system 108b may be encrypted at least from the firewall 116 all the way to the mobile device 102, and all data communicated to the enterprise service system 108b may be encrypted all the way from the mobile device 102 at least to the firewall 116.

The firewall 116 may protect sensitive enterprise data and services by isolating the enterprise's internal network from all external systems and data traffic. The servers 120a, 120b, the domain server 118, and/or other systems behind the firewall 116 can communicate with each other with a high level of trust, for example, by assuming that data received from any other device behind the firewall 116 is valid and authenticated. The firewall 116 may verify and/or authenticate all data communication traffic between the network 112b (which may include one or more public networks and/or low-security networks) and systems behind the firewall 116. For example, the firewall 116 can either accept, reject, or quarantine data received from the network 112b based on rules implemented by the firewall 116. The firewall 116 may include multiple firewalls.

The domain server 118 provides an interface between the data network 112b and the servers 120a, 120b. The domain server 118 may receive data from the mobile device 102 and route the data to an appropriate location behind the firewall 116. The domain server 118 may include various application programming interfaces (APIs) that communicate with computer programs and/or data services running the servers 120a, 120b. The servers 120a, 120b may include web servers, e-mail servers, messaging servers, application servers, databases and/or other types of servers that can communicate with mobile devices over the data network 112b. For example, the servers 120a, 120b may include one or more web servers that implement a web site having content for rendering on mobile devices. Two servers 120a, 120b are shown in FIG. 1, but generally an enterprise service system may include any number of servers and/or server clusters, which may include servers distributed in multiple locations. In some implementations, some or all of the enterprise service system hardware reside at a secure enterprise server location.

In some implementations, one or more of the servers 120a, 120b includes a corporate e-mail server and a corporate e-mail authorization database. The corporate e-mail server may maintain an e-mail account for each registered user, including e-mail messages that are sent from and received in each e-mail account. The e-mail server may include, for example, a Microsoft Outlook Exchange Server, Novell Groupwise Server, and/or another type of e-mail server. The authorization database may include authorization records for each e-mail account. The authorization records may include unique Personal Identification Number (PIN) entries that identify the mobile device associated with each e-mail account, and encryption keys which the e-mail server uses for the encrypted delivery of e-mail messages between the e-mail server and the mobile device. One or more of the servers 120a, 120b may provide additional or different types of corporate data services. For example, one or more of the servers 120a, 120b in the enterprise service system 108b may provide a document archive service, a software application service, and/or other types of corporate services.

In one aspect of operation, the mobile device 102 is configured to access multiple data service systems 108. For example, the mobile device 102 may be set up to access multiple different BIS systems and a corporate BES system. The mobile device 102 communicates with each of the data service systems 108 through the wireless networks 104. For example, the user may access a personal e-mail and calendar service provided on a BIS system, and the user may access a corporate e-mail and calendar service provided on the BES system. The data downloaded to the mobile device may include data associated with each of the data service systems 108. For example, the mobile device 102 may store corporate e-mails associated with the BES system and personal e-mails associated with the BIS system.

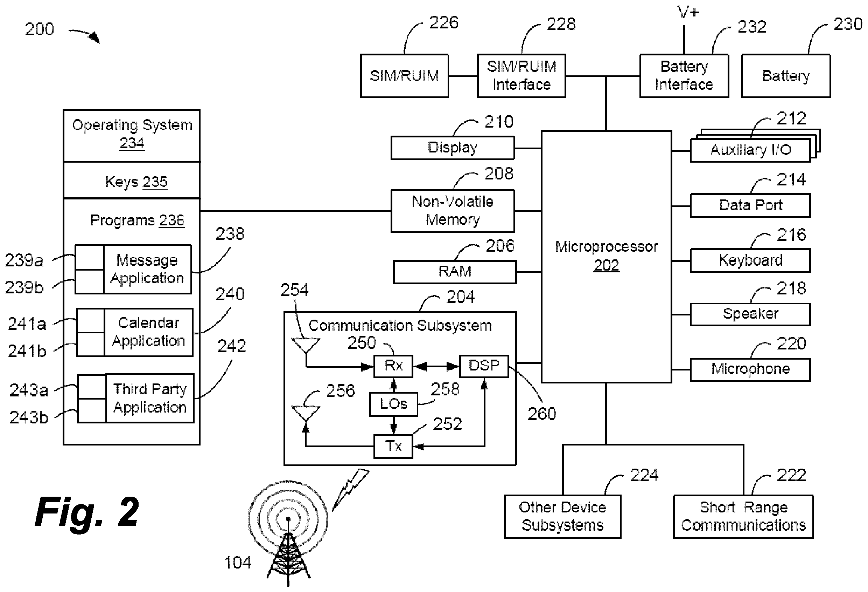

FIG. 2 shows an example of a mobile device architecture. A mobile device 200 can be a smart-phone such as a BLACKBERRY® mobile device. In this example, the mobile device 200 includes a microprocessor 202, a communication subsystem 204, random access memory (RAM) 206, non-volatile memory 208, a display 210, one or more auxiliary input/output (I/O) devices 212, a data port 214, a keyboard 216, a speaker 218, a microphone 220, a short-range wireless communications subsystem 222, other device subsystems 224, a SIM/RUIM card (*i.e.,* a Subscriber Identity Module or a Removable User Identity Module) 226, a SIM/RUIM interface 228, a rechargeable battery 230, a battery interface 232, and possibly other components. In some implementations, the mobile device 200 is a dual-mode mobile device. The mobile device 200 may include the same, additional, and/or different features, which may be arranged and/or operate in the manner shown or in a different manner.

The example mobile device 200 is a battery-powered device that includes a battery interface 232 that receives direct current electrical power from one or more rechargeable batteries 230. The battery 230 can be a smart battery with an embedded microprocessor or a different type of battery. The battery interface 232 may be coupled to a regulator (not shown), which may assists the battery 230 in providing power V+ to the mobile device 200. Additionally or alternatively, the mobile device 200 may receive power from an external source (*e.g.,* an alternating current power source, an adapter, a converter, etc.) and/or a different type of internal power source.

The example mobile device 200 shown in FIG. 2 is a two-way communication device having voice and data communication capabilities. Thus, the mobile device 200 may communicate over a voice network, such as any of the analog or digital cellular networks, and may also communicate over a data network. For example, the mobile device 200 may communicate over the example networks 104 shown in FIG. 1 and/or other types of networks. Voice and data networks may be implemented as separate communication networks using separate infrastructure, such as base stations, network controllers, etc., or the voice and data networks may be integrated into a single wireless network.

In the example mobile device 200 shown in FIG. 2, the communication subsystem 204 includes a receiver 250, a transmitter 252, antennae 254 and 256, one or more local oscillators 258, a digital signal processor (DSP) 260 and possibly other features. The antennas 254 and 256 may include antenna elements of a multiple-element antenna, embedded antennas, radio frequency (RF) antennas, and/or other types of antennas. The communication subsystem 204 is used to communicate with the network 104. The DSP 260 is used to receive and send signals through the receiver 250 and the transmitter 252, respectively, and the DSP 260 provides control information to the receiver 250 and the transmitter 252. For example, the gain levels applied to communication signals in the receiver 250 and the transmitter 252 may be adaptively controlled through automatic gain control algorithms implemented in the DSP 260. Additional and/or different types of control algorithms may be implemented in the DSP 260 to provide more sophisticated control of the communication subsystem 204.

In some implementations, the local oscillator 258 is a single local oscillator that provides a reference signal for the receiver 412 and the transmitter 414, for example, where voice and data communications occur at a single frequency, or closely-spaced sets of frequencies. Alternatively, for example if different frequencies are utilized for voice communications and data communications, the local oscillator 258 may include multiple local oscillators that are used to generate multiple different frequencies corresponding to the voice and data networks. Information, which may include both digital voice and digital data information, can be communicated within the mobile device 200 to and from the communication subsystem 204 through a link or bus between the DSP 260 and the microprocessor 202. The design and configuration of the communication subsystem 204, such as frequency band, component selection, power level, etc., may depend on the communication network in which the mobile device 200 is intended to operate.

After any required network registration or activation procedures have been completed, the mobile device 200 may the send and receive communication signals, including both voice and data signals, over the wireless networks 104. Signals received by the antenna 254 from the communication network 104 are routed to the receiver 250, which provides signal amplification, frequency down conversion, filtering, channel selection, etc., and may also provide analog to digital signal conversion. Analog to digital conversion of the received signal allows the resulting digital signal to be decoded by the DSP 260. Signals to be transmitted to the network 104 are processed (e.g., modulated, encoded, etc.) by the DSP 260 and are then provided to the transmitter 252 for digital to analog conversion, frequency up conversion, filtering, amplification and transmission to the communication network 104 via the antenna 256.

In some implementations, the mobile device 200 can send and receive communication signals over the wireless network 104 after wireless network registration or activation procedures have been completed. The wireless network registration or activation procedures for the mobile device 200 may vary based on the type of network or networks 104 with which the mobile device 200 operates. Wireless network access for the example mobile device 200 shown in FIG. 2 is associated with a subscriber or user of the mobile device 200. In particular, the SIM/RUIM card 226 in the SIM/RUIM interface 128 identifies the subscriber or user of the mobile device 200. With the SIM/RUIM card 126 in the SIM/RUIM interface 128, a subscriber can access all subscribed services through the wireless network 104. For example, subscribed services may include web browsing, e-mail, voice mail, Short Message Service (SMS), Multimedia Messaging Services (MMS), and/or others. The SIM/RUIM card 126 in the SIM/RUIM interface 128 communicates with the microprocessor 202 on the mobile device 200. To identify the subscriber, the SIM/RUIM card 126 may include user parameters, such as an International Mobile Subscriber Identity (IMSI) and/or another type of subscriber identifier. The SIM/RUIM card 126 may store additional and/or different subscriber information, including calendar information, call log information, contacts information, and/or other types of information. Additionally or alternatively, user identification information can also be stored in the non-volatile memory 208.

The data port 214 may include a serial port, a parallel port, and/or another type of connection port. In some implementations, the data port 214 is a Universal Serial Bus (USB) port that includes data lines for data transfer and a supply line that can provide a charging current to charge the battery 230 of the mobile device 200. The mobile device 200 may be manually synchronized with a host system, for example, by connecting the mobile device 200 through the data port 214 (*e.g.,* in an interface cradle and/or another type of wired connection) that couples the mobile device 200 to a data port of a computer system or other device. The data port 214 may also be used to enable a user to set preferences through an external device or software application, or to download other programs for installation. The wired connection of the data port 214 may be used to load an encryption key onto the device, which may be more secure method than exchanging encryption information via the wireless network 104.

The short-range communications subsystem 222 provides for communication between the mobile device 200 and different systems or devices, without the use of the wireless network 104. For example, the short-range communications subsystem 222 may include an infrared or radio frequency device and associated circuits and components for short-range communication. Examples of short-range communication standards include standards developed by the Infrared Data Association (IrDA), BLUETOOTH®, the 802.11 family of standards developed by IEEE, and others.

The microprocessor 202 manages and controls the overall operation of the mobile device 200. Many types of microprocessors or microcontrollers may be used. Additionally or alternatively, a single DSP 260 may be used to carry out one or more functions of the microprocessor 202. Low-level communication functions, including data and voice communications, may be performed through the DSP 260 in the communication subsystem 204. High-level communication applications, such as voice communication applications, data communication applications, and/or other types of software applications may be stored in the non-volatile memory 208 for execution by the microprocessor 202. The microprocessor 202 also interacts with other device subsystems, such as the display 210, the RAM 206, the auxiliary input/output (I/O) subsystems 212, the data port 214, the keyboard 216, the speaker 218, the microphone 220, the SIM/RUIM interface 228, the battery interface 232, the short-range communications subsystem 220, and any other device subsystems generally designated as 224.

The non-volatile memory 208 includes erasable persistent storage, for example, flash memory, battery-backed-up RAM, and/or other types of memory. In the example shown in FIG. 2, the non-volatile memory 208 stores instructions and data associated with an operating system 234, transport keys 235 for secure data communication, programs 236 that provide various types of functionality for the mobile device 200, and other types of information. The non-volatile memory 208 may include a file system to facilitate storage of data items on the device. For example, the operating system 234, the programs 236, and/or other modules executed on the microprocessor 202 may store, retrieve, modify, delete, and/or otherwise manipulate data by accessing (e.g., read, write, etc.) the file system provided on the non-volatile memory 208.

Data stored in the non-volatile memory 208 and/or other computer-readable media on the mobile device 200 may include user application data, text files, image files, voicemail data, and other data generated by the user at the mobile device 200 or received and stored by the mobile device 200. The user application data may include, for example, e-mail message data, address book data, contact information data, calendar appointment data, instant message data, SMS message data, voicemail data, user-entered data, and/or other types of application data. Voicemail data may include digitized audio recordings and/or stub entries available for viewing in a messaging application indicating the availability of a voicemail message stored at another location. User-entered data may include text-based, graphic, or other multimedia files loaded onto the mobile device 200 by the user.

The operating system 234 controls low-level functions of the mobile device 200 and facilitates operation of the programs 236. For example, the operating system 234 may provide an interface between one or more of the programs 236 and one or more hardware components on the mobile device 200. The programs 236 include computer program modules that can be executed by the microprocessor 202 (and/or the DSP 260 in some instances). In some implementations, one or more of the programs 236 are executed by the microprocessor 202 and provide a high-level interface between a user and the mobile device 200. The user interface provided by a program 236 typically includes a graphical component provided through the display 210, and may additionally include an input/output component provided through the auxiliary I/O 212, the keyboard 216, the speaker 218, and/or the microphone 220. The operating system 234, specific device applications or programs 236, or parts thereof, may be temporarily loaded into a volatile store, such as RAM 206, for faster operation. Moreover, received communication signals may also be temporarily stored to RAM 206 before they are permanently written to a file system in the non-volatile memory 208.

In the example mobile device 200 shown in FIG 2, the programs 236 stored in the non-volatile memory 208 include a message application 238, a calendar application 240, one or more third party applications 242, and possibly other types of applications. The programs 236 may include additional or different modules, programs, or applications, such as, for example, a Personal Information Manager (PIM) module, a connect module, a device state module, an IT policy module, a multi service platform manager, and/or others. The programs 236 may include programs that control basic device operations, which would typically be installed on the mobile device 200 during its manufacture and/or initial configuration. Other types of software applications, such as, for example, third party applications 242 and/or other types of modules, may be added after the manufacture and initial configuration of the mobile device 100. Examples of third party applications 242 include games, utilities, internet applications, etc. Generally, any of the programs 236 may be updated and/or modified at any time. The additional applications and/or updates to applications can be loaded onto the mobile device 200 through the wireless network 104, the auxiliary I/O subsystem 212, the data port 214, the short-range communications subsystem 222, or any other suitable device subsystem 224.

Generally, each of the programs 236 may store data associated with any number of different data services. For example, each program may store data received from an enterprise service and one or more Internet services. For clarity, each of the programs 236 shown in FIG. 2 is shown as storing data associated with two different example data services: one BES system and one BIS system. For example, the third party application shown in FIG. 2 stores BES application data 243a associated with a BES system and BIS application data 243b associated with a BIS system. The BES system may include the enterprise service system 108b shown in FIG. 1, and the BIS system may include the Internet service system 108a shown in FIG. 1. In other examples, the applications may each store data associated with one or more of multiple different BES system and/or data associated with one or more of multiple BIS systems.

The message application 238 may include a software program that allows a user of the mobile device 200 to send and receive electronic messages (e.g., SMS messages and/or other types of messages). Messages that have been sent or received by the user are typically stored in the non-volatile memory 208 of the mobile device 200 or some other suitable storage element in the mobile device 200. In some implementations, some of the sent and received messages may be stored remotely from the mobile device 200, for example, in a data store of an associated host system. The message application 238 stores BES message data 239a associated with a BES system and BIS message data 239b associated with a BIS system. For example, the BES message data 239a may include messages associated with the user's business e-mail account and the BIS message data 239b may include messages associated with the user's personal e-mail account.

The calendar application 240 may include a software program that allows a user of the mobile device 200 to store and/or manipulate schedules, appointments, tasks, and/or other types of calendar information. The calendar application 240 may automatically synchronize and/or document appointments, issue reminders, track deadlines, and/or perform other operations. The calendar application 240 stores BES calendar data 241a associated with a BES system and BIS calendar data 241b associated with a BIS system. For example, the BES calendar data 241a may include data relating to a user's business appointments and the BIS calendar data 241b may include data relating to a user's personal appointments.

The mobile device 200 may include additional programs, each of which may store data associated with the BES system, the BIS system, and/or other data services to which the mobile device 200 has access. In some implementations, the mobile device includes a device state module that provides persistence to ensure that important device data is stored in persistent memory so that the data is not lost when the mobile device 200 is turned off or loses power. The mobile device 200 may include a PIM module for organizing and managing data items of interest to the user. For example, the PIM module may be used to manage e-mail, contacts, calendar events, voice mails, appointments, task items, and/or other types of data stored on the mobile device 200. The PIM application may have the ability to send and receive data items via a wireless network. In some implementations, the mobile device 200 includes an IT policy module. The IT policy may include a set of predefined rules that define access privileges, security requirements, and/or other data relating to functionality or use of the mobile device 200.

As shown in FIG. 2, the non-volatile memory 208 stores keys 235, which may include encryption and decryption keys and addressing information for use in communicating between the mobile device 200 and servers. In some implementations, the mobile device 200 includes a connect module that implements the communication protocols that are required for the mobile device 200 to communicate with the wireless infrastructure and/or remote data services. For example, the connect module may implement data encryption and/or other types of protocols for communicating with an enterprise service, an Internet service, and/or other types of data services with which the mobile device 200 is authorized to interface. The connect module may access and use the transport keys 235 for encrypting and/or decrypting data communications with the various data services (*e.g*., the BES system, the BIS system, and/or others). The connect module may include a set of Application Programming Interfaces (APIs) that can be integrated with the mobile device 200 to allow the mobile device 200 to use any number of data services. The connect module may allow the mobile device 200 to establish a secure, authenticated communications with host systems.

A mobile device may be used to manage data from multiple sources each with a different purpose. For example, some data may come from a corporate source, such as a work email account via a corporate data service, whose purpose is work-related. Further, some data may come from a personal source, such as a personal email account via a public data service (e.g., a publicly accessible email system), whose purpose is personal. The ability to manage data from multiple sources and use that data for different purposes may increase the usefulness of a mobile device from an end-users perspective. However, from the perspective of a corporate administrator responsible for managing corporate data, the administrator may require increased security features on a mobile device to prevent the leakage of corporate data to non-corporate data services. For example, suppose a mobile device is activated against a BES and multiple BIS services. The administrator of the BES may want to ensure that data sent to the device will not be forwarded off of the device via a non-BES channel, while minimizing the effects of such a restriction on non-BES functionality.

A mobile device operating system may provide a core access control framework to control data transfers. Using the framework, the mobile device may determine if an application is allowed access to functionality provided by a specific source data service. Various operating system components responsible for managing access to data associated with individual source services may use the framework to determine if a requesting application is prohibited from accessing data for one or more data services. If access is prohibited, then data associated with those services may be filtered out and not returned to the requesting application.

To support applications that are allowed to access data associated with multiple services and to support other operations, applications have the ability to report their current service mode. In some implementations, the service mode is associated with a server system that provides a data service to mobile devices. The information reported back by a given application can be used to help identify the set of services that are compatible with the application's current service mode. For example, a messaging application is allowed to access emails delivered using a corporate email account (e.g., a BES account) and emails delivered using non-corporate email accounts (e.g., BIS accounts). If the application is in a state where it is only being used to manage emails delivered using the corporate email account then the application can report a service mode associated with a corporate data service. Reporting a service mode may include reporting a service identifier (service ID). If the application is in a state where it is only being used to manage emails delivered using a non-corporate email account, then the application can report a service mode associated with the non-corporate data service. In some cases, an application can display messages from the corporate email account and one or more non-corporate email accounts in the same reading plane. In these cases, an application can report a service mode associated with a combined data service mode.

In some implementations, the message application 238, the calendar application 240, and the third-party application 242 may each be assigned one or more service identifiers. The message application 238 may be assigned multiple service identifiers and configured to operate in multiple service modes associated with the different service identifiers. For example, the different service identifiers may include a first corporate service identifier, a second corporate service identifier, and a personal service identifier. In this example, the message application 238 may operate in a first corporate mode, a second corporate mode and a personal mode. In these instances, a consultant may have multiple corporate accounts with each account associated with a different enterprise and being assigned a different service identifier. In doing so, the consultant may maintain data associated with the two different corporate accounts in confidence. In some implementations, an administrator may assign a service identifier to the message application 238 and identify other applications that the message application 238 can transfer data to and from. For example, the message application 238 may be assigned a setting indicating that transferring data to the calendar application 240 when operating in a specified mode is allowed. In some implementations, an enterprise that provides multiple services to the device 200 may assign the same service identifier to each application receiving services from the enterprise. For example, if the device 200 receives both calendar and message services from an enterprise, the administrator may assign the same service identifier to the message application 238 and the calendar application 240. In some implementations, the applications may be assigned a different service identifier for each server providing services to the device 200. In these instances, the administrator may identify which service identifiers may transfer data.

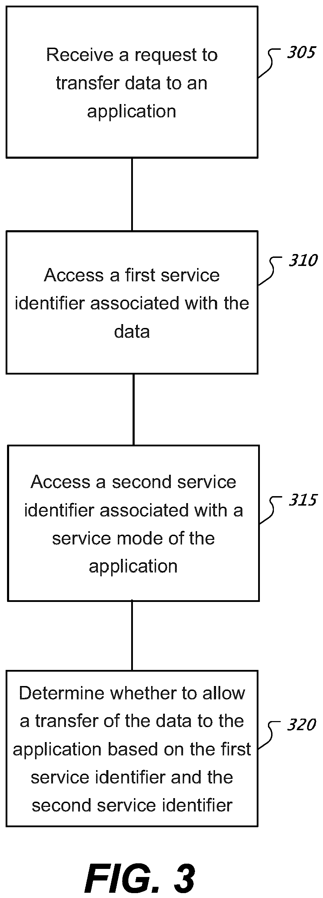

FIG. 3 shows an example of a data transfer technique. A mobile device can include an access control framework layer that controls the transfer of data based on service identifiers. At 305, the mobile device receives a request to transfer data to an application. For example, a source application can send a request to transfer data to a target application. In another example, a target application may send a request to transfer data from an external source to itself.

At 310, the device accesses a first service identifier associated with the data. The data may originate from a data service identified by the first service identifier. At 315, the device accesses a second service identifier associated with a service mode of the application. The service mode may be associated with a server system that provides a data service to the mobile device. The service mode may be associated with a data service provided via the mobile device, such as a data service provided by an e-mail server system, a data service provided by a messaging server system, a data service provided by a calendaring server system, or a data service provided by a camera application running on the mobile device. In some implementations, a server system may provide two or more data services. In some implementations, accessing a second service identifier includes querying the application for the service mode, and receiving a reported service mode. In some implementations, the mobile device accesses permission information associated with the application, and determines whether the reported service mode is allowed by the permission information.

At 320, the device determines whether to allow a transfer of the data to the application based on the first service identifier and the second service identifier. Determining, at 320, may include allowing the transfer of the data to the application in response to determining that the second service identifier matches the first service identifier. Determining, at 320, may include applying one or more data transfer settings associated with the first service identifier to the second service identifier in response to determining that the second service identifier does not match the first service identifier.

An application may handle data from one or more data services. In some cases, an application may be configured to operate in a first service mode that is associated with the first service identifier and in a second service mode that is associated with the second service identifier. Such an application may provide an interface to select amongst two or more service modes. A request to transfer data may be a request to transfer data within the application, for example, a request for copying data from an e-mail associated with a corporate e-mail data service and pasting the data to an e-mail associated with a non-corporate e-mail data service. An application may include two or more threads or processes. A request may transfer data from one thread or process associated with the application to another thread or process associated with the application. The service mode reported by an application is a current service mode, such as a mode associated with a top-level window currently being displayed to a user.

A mobile device's access control framework may receive, for example, a request to transfer data from a clipboard data area to a destination application. In some implementations, the clipboard data area stores the data and an associated service identifier. The access control framework may access the clipboard data area to obtain the associated service identifier to determine whether to allow the data to be transferred out of the clipboard data area. The destination application, for example, may include a calendaring application and the request includes a request to insert the data from the clipboard into a calendar entry associated with the calendaring application. In another example, the destination application may include an e-mail application and the request includes a request to insert the data from the clipboard into a message being composed via the e-mail application. In yet another example, the destination application may include a text messaging application and the request includes a request to insert the data from the clipboard into a text message. Other types of destination applications are possible.

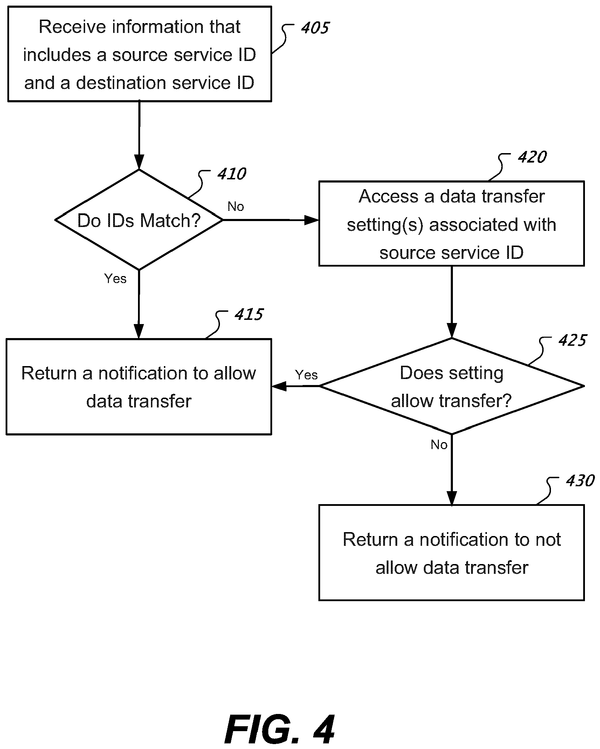

FIG. 4 shows an example of a data transfer permission determination technique. An access control framework layer running on a mobile device performs a determination as to whether an application is allowed to receive data via a data transfer. At 405, the mobile device receives information that includes a source service ID and a destination service ID. The source service ID can be associated with a source application attempting to transfer data to a destination application which is associated with a destination service ID.

At 410, the mobile device determines whether the source service ID matches with the destination service ID. If the service IDs match, then, at 415, the mobile device returns a notification to allow a data transfer. In some cases, returning a notification may include sending a notification status to the source application which indicates that the source application is allowed to transfer data to the destination application. In some other cases, returning a notification may include sending a message to a transfer manager to transfer data to the destination application.

If the source service ID does not match with the destination service ID, then, at 420, the mobile device accesses a data transfer setting(s) associated with the source service ID. At 425, the mobile device determines whether the accessed setting allows a data transfer, e.g., a data transfer to a different service ID. If the accessed setting(s) does allow a transfer, then, at 415, the mobile device returns a notification to allow the data transfer. If the accessed setting does not allow a transfer, then, at 430, the mobile device returns a notification to not allow the data transfer. Returning a notification may include returning a status indicating that permission is denied.

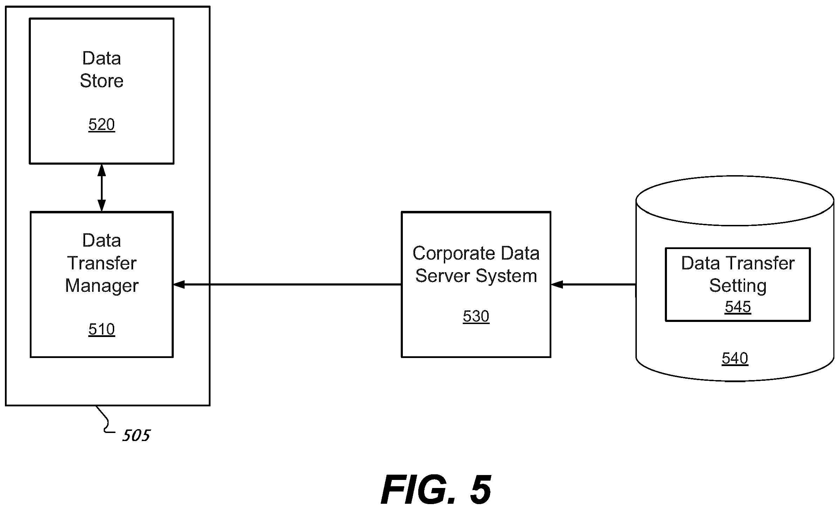

FIG. 5 shows an example of a corporate data server system providing one or more data transfer settings to a mobile device. A corporate data server system 530 can provide corporate data access to a mobile device 505. An IT administrator can configure one or more data transfer settings 545 on a database 540. The corporate data server system 530 may include the database 540. The data transfer settings 545 can indicate what type(s) of data transfers are permitted and which ones are not permitted. After providing one or more of the settings 545 to the mobile device 505, the provided settings can be stored in a data store 520 located on the mobile device 505 for use by a data transfer manager 510, which may use an access control framework as described herein. In some implementations, the settings 545 are provided to the mobile device 505 over a wireless network in order to update the data store 520 on the mobile device 505. In some implementations, the mobile device 505 can be pre-programmed with initial settings, which can be updated by the IT administrator.

The IT administrator can specify data transfer settings 545 for one or more devices 505. The capability to push data transfer settings to a device can provide, among other things, the customization of data transfer settings. In some cases, an IT administrator may provide the same settings to all mobile devices of the company, thereby ensuring that company mobile devices adhere to a consistent IT policy. A company's IT policy can specify which data transfer-related features, supported by a mobile device 505, are enabled or disabled. A data transfer setting(s) 545 can enable/disable such security-related aspects associated with data transfers. Examples of such settings includes a setting for data forwarding between different data services, a setting for cutting-and-pasting operations between data services, a setting for transferring data via a network connection, a setting for transferring data via interprocess communication (IPC) between processes, and a setting for application service ID based checking. Other settings are possible.

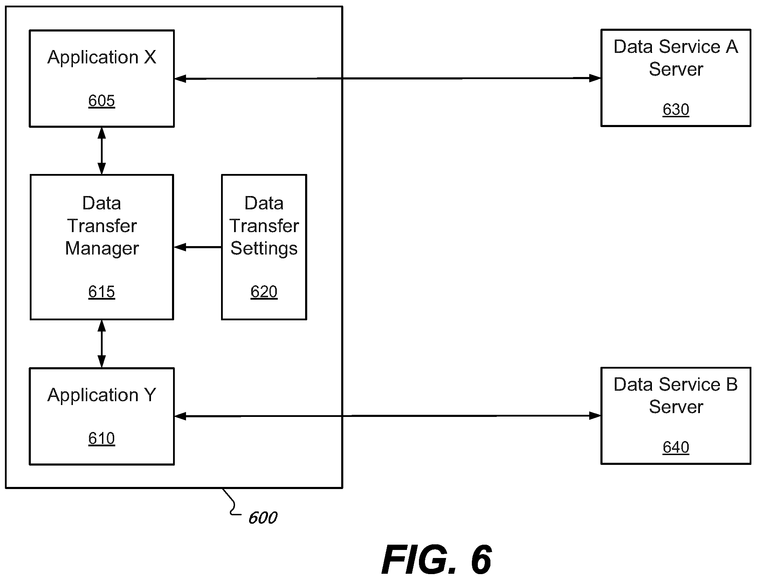

FIG. 6 shows an example of a data transfer management architecture. A mobile device 600 can access data service servers 630, 640 via a wireless network. Various examples of services include a corporate e-mail service(s), a user's personal e-mail service(s), an instant messaging service(s), a text messaging service(s), peer-to-peer messaging service(s), social networking messaging service(s), and voice mail service(s). A mobile device 600 can run a data transfer manager 615 to control a transfer of data to an application 605, 610. The data transfer manager 615 can use one or more data transfer setting(s) to determine whether to allow a data transfer. A data transfer control mechanism may allow a company to disable one or more types of data transferring between services. For example, if a device receives an e-mail message via a server 630 associated with service A, and then attempts to forward the message, then the data transfer settings 620 are invoked to filter and prevent the device from forwarding the e-mail message using another e-mail account as source via a server 640 associated with service B. In some implementations, messages that arrive via a server 630 associated with service A are required to be replied to or forwarded back through the same service A from which the message arrived.

A mobile device can run a clipboard utility that provides a data transfer functionality. The clipboard utility may provide access to data from different sources, e.g., different service IDs. When data are copied or cut into the clipboard, information about the originating data service of the data may be tracked along with the data. The originating service information may be derived from a source application's current service mode. When pasting information that has been previously copied or cut into the clipboard, a core access control framework can be used to determine if data from the originating source are allowed to be pasted into the target application. This determination may include querying the target application for its current service mode and then querying the access control framework if data are allowed to flow from the originating source data service to the target data service. If no restrictions exist to prevent the pasting of data, then the operation is permitted. Otherwise, the paste operation is restricted. If the paste operation is permitted, the clipboard utility informs the target application of the service mode associated with the pasted data. In some cases, if data are copied from a calendar appointment that is associated with a BES and pasted into a new draft e-mail, the e-mail client may require the device to send this information using only a BES e-mail account.

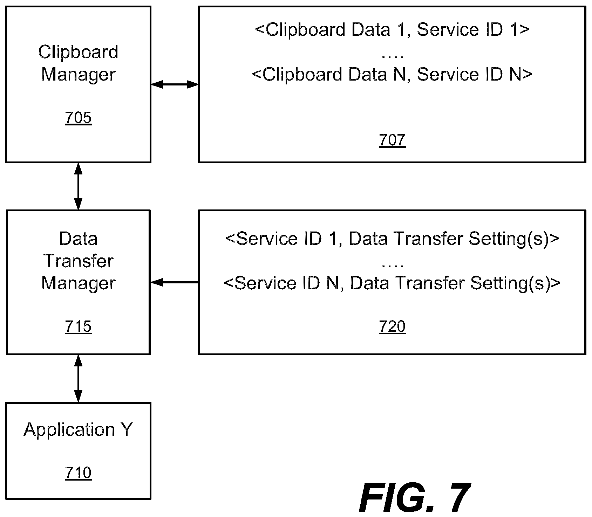

FIG. 7 shows an example of a clipboard utility based on a data transfer management architecture. A mobile device user operation can cause data to be copied to a clipboard manager 705 in a copy operation. In some cases, an application can automatically push data to the clipboard manager 705. The clipboard manager 705 stores the data in a clipboard data store 707 along with an associated service ID. The clipboard manager 705 can query the application responsible for causing the copy operation to determine a service identifier associated with the data. For example, a user may copy data within an e-mail received from a corporate e-mail server. The service ID stored with the copied data in the clipboard data store 707 would be associated with the corporate e-mail server.

A paste operation can cause clipboard data to be provided to an application 710. For example, a user may paste data from a source application to a destination application 710. In another example a user may paste and copy data within the same application. In some cases, an application can automatically trigger a paste operation. In the paste operation, the clipboard manager 705 may check with a data transfer manager 715. The clipboard manager 705 may provide a service ID associated with the clipboard data identified by the paste operation to the data transfer manager 715. The data transfer manager 715 may access a data store 720 to retrieve one or more data transfer settings associated with a provided service ID. In some cases if the data store 720 does not include a data transfer setting for a provided service ID, the data transfer manager 715 may use a default data transfer setting.

The clipboard manager 705 may provide a service ID associated with the destination application 710 to the data transfer manager 715. The data transfer manager 715 may compare the service IDs of the clipboard data and the application 710 to determine whether to allow the paste operation to proceed. If the service IDs match, the paste operation may proceed. If they do not match, the data transfer manager 715 may access one or more data transfer settings associated with the service ID corresponding to the service ID of the clipboard data identified by the paste operation. A data transfer setting may indicate whether to allow a data transfer between different service IDs.

In some implementations, restrictions on the flow of data between services are specified by administrators of a data service and applied to individual devices for enforcement. These restrictions can be specified via IT policy or software configurations. These restrictions can be processed and enforced by a mobile device's access control framework, which can be queried by other components on the device.

In some implementations, an application running on a mobile device may determine its service mode by accessing a data field that stores a current mode of the application. The data field may be when the current service mode changes. In some implementations, an application running on a mobile device may determine its service mode by using information about the current activity being conducted within the application. One way to acquire this information is to look at the application's UI components, such as the top-most screen, and querying the UI components to determine the current mode. Updates to the application's mode may be propagated back to the application's various UI components.

In some implementations, queries regarding an application's current mode may be funneled through a mobile device's access control framework to guard against applications reporting an improper mode of execution, perhaps to gain unauthorized access to data. This framework may include a mechanism to validate that the mode reported by an application is valid with respect to the application's current permission settings. In the event a reported mode is deemed invalid, the access control framework may take corrective measures to modify the reported mode into one that is more appropriate given the application's current permissions.

In some implementations, a communication system includes a first server system to provide a data service to mobile devices and a second server system to provide one or more data transfer settings to the mobile devices. The data transfer settings may be associated with the provided data service and control the transfer of data on a mobile device that pertains to data received from the provided data service. In some implementations, the first server system includes the second server system. A server system may include one or more data processing apparatuses such as servers.

The disclosed and other implementations and the functional operations described in this document can be implemented in digital electronic circuitry, or in computer software, firmware, or hardware, including the structures disclosed in this document and their structural equivalents, or in combinations of one or more of them. The disclosed and other implementations can be implemented as one or more computer program products, i.e., one or more modules of computer program instructions encoded on a computer storage device for execution by, or to control the operation of, data processing apparatus. The computer storage device can be a non-transitory machine readable medium, machine-readable storage device, a machine-readable storage substrate, a memory device, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a standalone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. A computer storage device suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this document contains many specifics, these should not be construed as limitations on the scope of an invention that is claimed or of what may be claimed, but rather as descriptions of features specific to particular implementations. Certain features that are described in this document in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A method, comprising:
receiving a request to transfer data from a source application configured to run on a mobile device to a clipboard data area, wherein the data originated from a first data service identified by a first service identifier, the source application configured to operate in different service modes associated with different service identifiers;
determining the current operating mode of the source application to be a first operating mode that is associated with the first service identifier and a server system that provides the first data service;
based on the determining, transferring the data and the first service identifier to the clipboard data area such that the first service identifier is associated with the data in the clipboard data area;
receiving a request to transfer the data from the clipboard data area to a destination application;
determining the current operating mode of the destination application to be a second operating mode that is associated with a second service identifier and a server system that provides a second data service, the determining including an access control framework of the mobile device validating an operating mode reported by the destination application against current permission settings for the destination application and adjusting the current operating mode of the destination application based on the current permission settings for the destination application in the event the validating fails, the adjusting including modifying the second service identifier to correspond to the adjusted operating mode of the destination application; and
based on the modified second service identifier not matching the first service identifier, preventing transfer of the data from the clipboard data area to the destination application.

2. The method of claim 1, further comprising:
determining that the source application is operating in a service mode different from a service mode associated with the data; and
assigning, to the source application, a same service mode assigned to the data.

3. The method of claim 1, further comprising:
identifying a third service identifier assigned to a service mode of the source application, wherein the service mode is associated with a third data service provided via the mobile device; and
applying one or more data transfer settings associated with the first service identifier to the third service identifier based on the third service identifier not matching the first service identifier.

4. The method of claim 1, wherein the different service modes include a first corporate mode associated with a first corporate service identifier, a second corporate mode different from the first corporate mode and associated with a second corporate service identifier, and a personal mode associated with a personal service identifier.

5. The method of claim 1, further comprising receiving one or more data transfer settings from the first server.

6. The method of claim 1, wherein the source application comprises at least one of a calendaring application, an electronic mail application, a messaging application, or a notification application.

7. The method of claim 1, further comprising querying the source application for the first service mode, and receiving a reported service mode from the source application.

8. The method of claim 7, further comprising accessing permission information associated with the source application and determining whether the reported service mode is allowed by the permission information.

9. The method of claim 1, wherein the destination application is the same application as the source application.

10. A device, comprising:
one or more processors configured to:
receive a request to transfer data from a source application configured to run on a mobile device to a clipboard data area, wherein the data originated from a first data service identified by a first service identifier, the source application configured to operate in different service modes associated with different service identifiers;
determine the current operating mode of the source application to be a first operating mode that is associated with the first service identifier and a server system that provides the first data service;
based on the determination, transfer the data and the first service identifier to the clipboard data area such that the first service identifier is associated with the data in the clipboard data area;
receive a request to transfer the data from the clipboard data area to a destination application;
determine the current operating mode of the destination application to be a second operating mode that is associated with a second service identifier and a server system that provides a second data service, the determining including an access control framework of the mobile device validating an operating mode reported by the destination application against current permission settings for the destination application and adjusting the current operating mode of the destination application based on the current permission settings for the destination application in the event the validating fails, the adjusting including modifying the second service identifier to correspond to the adjusted operating mode of the destination application; and
prevent transfer of the data from the clipboard data area to the destination application based on the second service identifier not matching the first service identifier.

11. The device of claim 10, the one or more processors further configured to:
determine that the source application is operating in a service mode different than the service mode associated with the data; and
assign, to the source application, a same service mode assigned to the data.

12. The device of claim 10, wherein the one or more processors are further configured to:
identify a third service identifier assigned to a service mode of the source application, wherein the service mode is associated with a third data service provided via the mobile device; and
apply one or more data transfer settings associated with the first service identifier to the third service identifier based on the third service identifier not matching the first service identifier.

13. The device of claim 10, wherein the different service modes include a first corporate mode associated with a first corporate service identifier, a second corporate mode different from the first corporate mode and associated with a second corporate service identifier, and a personal mode associated with a personal service identifier.

14. The device of claim 10, the one or more processors further configured to receive one or more data transfer settings from the first server.

15. The device of claim 10, wherein the source application comprises at least one of a calendaring application, an electronic mail application, a messaging application, or a notification application.

16. A computer program product encoded on a tangible, non-transitory storage medium, the computer program product comprising computer readable instructions for causing one or more processors to perform operations carrying out the method of any of claims 1 to 9.

## Patentansprüche

1. Verfahren, das Folgendes umfasst:
Empfangen einer Anforderung zum Übertragen von Daten von einer Quellanwendung, die für die Ausführung auf einer mobilen Vorrichtung konfiguriert ist, in einen Datenbereich in der Zwischenablage; wobei die Daten, die von einem ersten Datendienst stammen, durch eine erste Dienstkennung identifiziert werden, wobei die Quellanwendung dafür konfiguriert ist, in verschiedenen Dienstmodi zu arbeiten, die verschiedenen Dienstkennungen zugeordnet sind;
Bestimmen des aktuellen Betriebsmodus der Quellanwendung als erster Betriebsmodus, der der ersten Dienstkennung und einem Serversystem zugeordnet ist, das den ersten Datendienst bereitstellt;
basierend auf dem Bestimmen, Übertragen der Daten und der ersten Dienstkennung in den Datenbereich der Zwischenablage, so dass die erste Dienstkennung den Daten im Datenbereich der Zwischenablage zugeordnet ist;
Empfangen einer Anforderung zum Übertragen der Daten aus dem Datenbereich der Zwischenablage an eine Zielanwendung;
Bestimmen der aktuellen Betriebsart der Zielanwendung als zweite Betriebsart, die einer zweiten Dienstkennung und einem Serversystem zugeordnet ist, das einen zweiten Datendienst bereitstellt, wobei das Bestimmen ein Zugriffssteuerungs-Framework der mobilen Vorrichtung umfasst, das einen von der Zielanwendung gemeldeten Betriebsmodus anhand der aktuellen Berechtigungseinstellungen für die Zielanwendung überprüft und das den aktuellen Betriebsmodus der Zielanwendung basierend auf den aktuellen Berechtigungseinstellungen für die Zielanwendung anpasst, falls die Validierung fehlschlägt, wobei das Einstellen das Ändern der zweiten Dienstkennung umfasst, um dem angepassten Betriebsmodus der Zielanwendung zu entsprechen; und
basierend darauf, dass die modifizierte zweite Dienstkennung nicht mit der ersten Dienstkennung übereinstimmt, Verhindern der Übertragung der Daten aus dem Datenbereich der Zwischenablage an die Zielanwendung.

2. Verfahren nach Anspruch 1, das ferner Folgendes umfasst:
Bestimmen, dass die Quellanwendung in einem Dienstmodus arbeitet, der sich von einem den Daten zugeordneten Dienstmodus unterscheidet; und
Zuweisen des gleichen Dienstmodus, der den Daten zugewiesen ist, zur Quellanwendung.

3. Verfahren nach Anspruch 1, das ferner Folgendes umfasst:
Identifizieren einer dritten Dienstkennung, die einem Dienstmodus der Quellanwendung zugewiesen ist; wobei der Dienstmodus einem dritten Datendienst zugeordnet ist, der über die mobile Vorrichtung bereitgestellt wird; und
Anwenden einer oder mehrerer Datenübertragungseinstellungen, die der ersten Dienstkennung zugeordnet sind, auf die dritte Dienstkennung basierend auf der dritten Dienstkennung, die nicht mit der ersten Dienstkennung übereinstimmt.

4. Verfahren nach Anspruch 1, wobei die verschiedenen Dienstmodi Folgendes umfassen: einen ersten Unternehmensmodus, der einer ersten Unternehmensdienstkennung zugeordnet ist, einen zweiten Unternehmensmodus, der sich von dem ersten Unternehmensmodus unterscheidet und mit einer zweiten Unternehmensdienstkennung verknüpft ist, und einen persönlichen Modus, der einer persönlichen Dienstkennung zugeordnet ist.

5. Verfahren nach Anspruch 1, das ferner das Empfangen einer oder mehrerer Datenübertragungseinstellungen vom ersten Server umfasst.

6. Verfahren nach Anspruch 1, wobei die Quellanwendung mindestens eine Kalenderanwendung, eine E-Mail-Anwendung, eine Nachrichtenanwendung oder eine Benachrichtigungsanwendung umfasst.

7. Verfahren nach Anspruch 1, das ferner das Abfragen der Quellanwendung für den ersten Dienstmodus und das Empfangen eines gemeldeten Dienstmodus von der Quellanwendung umfasst.

8. Verfahren nach Anspruch 7, das ferner Folgendes umfasst: Zugreifen auf Berechtigungsinformationen, die der Quellanwendung zugeordnet sind, und Bestimmen, ob der gemeldete Dienstmodus von den Berechtigungsinformationen zugelassen wird.

9. Verfahren nach Anspruch 1, wobei die Zielanwendung dieselbe Anwendung wie die Quellanwendung ist.

10. Vorrichtung, die Folgendes umfasst:
einen oder mehrere Prozessoren, die für Folgendes konfiguriert sind:
Empfangen einer Anforderung zum Übertragen von Daten von einer Quellanwendung, die für die Ausführung auf einer mobilen Vorrichtung konfiguriert ist, in einen Datenbereich in der Zwischenablage; wobei die Daten, die von einem ersten Datendienst stammen, durch eine erste Dienstkennung identifiziert werden, wobei die Quellanwendung dafür konfiguriert ist, in verschiedenen Dienstmodi zu arbeiten, die verschiedenen Dienstkennungen zugeordnet sind;
Bestimmen des aktuellen Betriebsmodus der Quellanwendung als erster Betriebsmodus, der der ersten Dienstkennung und einem Serversystem zugeordnet ist, das den ersten Datendienst bereitstellt;
basierend auf dem Bestimmen, Übertragen der Daten und der ersten Dienstkennung in den Datenbereich der Zwischenablage, so dass die erste Dienstkennung den Daten im Datenbereich der Zwischenablage zugeordnet ist;
Empfangen einer Anforderung zum Übertragen der Daten aus dem Datenbereich der Zwischenablage an eine Zielanwendung;
Bestimmen der aktuellen Betriebsart der Zielanwendung als zweite Betriebsart, die einer zweiten Dienstkennung und einem Serversystem zugeordnet ist, das einen zweiten Datendienst bereitstellt, wobei das Bestimmen ein Zugriffssteuerungs-Framework der mobilen Vorrichtung umfasst, das einen von der Zielanwendung gemeldeten Betriebsmodus anhand der aktuellen Berechtigungseinstellungen für die Zielanwendung überprüft und das den aktuellen Betriebsmodus der Zielanwendung basierend auf den aktuellen Berechtigungseinstellungen für die Zielanwendung anpasst, falls die Validierung fehlschlägt, wobei das Einstellen das Ändern der zweiten Dienstkennung umfasst, um dem angepassten Betriebsmodus der Zielanwendung zu entsprechen; und
Verhindern der Übertragung der Daten aus dem Datenbereich der Zwischenablage an die Zielanwendung basierend auf der zweiten Dienstkennung, die nicht mit der ersten Dienstkennung übereinstimmt.

11. Vorrichtung nach Anspruch 10, wobei der eine oder die mehreren Prozessoren ferner für Folgendes konfiguriert sind:
Bestimmen, dass die Quellanwendung in einem Dienstmodus arbeitet, der sich von einem den Daten zugeordneten Dienstmodus unterscheidet; und
Zuweisen des gleichen Dienstmodus, der den Daten zugewiesen ist, zur Quellanwendung.

12. Vorrichtung nach Anspruch 10, wobei der eine oder die mehreren Prozessoren ferner für Folgendes konfiguriert sind:
Identifizieren einer dritten Dienstkennung, die einem Dienstmodus der Quellanwendung zugewiesen ist; wobei der Dienstmodus einem dritten Datendienst zugeordnet ist, der über die mobile Vorrichtung bereitgestellt wird; und
Anwenden einer oder mehrerer Datenübertragungseinstellungen, die der ersten Dienstkennung zugeordnet sind, auf die dritte Dienstkennung basierend auf der dritten Dienstkennung, die nicht mit der ersten Dienstkennung übereinstimmt.

13. Vorrichtung nach Anspruch 10, wobei die verschiedenen Dienstmodi Folgendes umfassen: einen ersten Unternehmensmodus, der einer ersten Unternehmensdienstkennung zugeordnet ist, einen zweiten Unternehmensmodus, der sich von dem ersten Unternehmensmodus unterscheidet und mit einer zweiten Unternehmensdienstkennung verknüpft ist, und einen persönlichen Modus, der einer persönlichen Dienstkennung zugeordnet ist.

14. Vorrichtung nach Anspruch 10, wobei der eine oder die mehreren Prozessoren ferner dafür konfiguriert sind, eine oder mehrere Datenübertragungseinstellungen vom ersten Server zu empfangen.

15. Vorrichtung nach Anspruch 10, wobei die Quellanwendung mindestens eine Kalenderanwendung, eine E-Mail-Anwendung, eine Nachrichtenanwendung oder eine Benachrichtigungsanwendung umfasst.

16. Computerprogrammprodukt, das auf einem materiellen, nicht vorübergehenden Speichermedium codiert ist, wobei das Computerprogrammprodukt computerlesbare Anweisungen umfasst, um einen oder mehrere Prozessoren zu veranlassen, Operationen auszuführen, die das Verfahren nach einem der Ansprüche 1 bis 9 ausführen.

## Revendications

1. Procédé, comprenant les étapes consistant à :
recevoir une demande de transfert de données depuis une application source configurée pour fonctionner sur un appareil mobile à une zone de données du presse-papier, dans lequel les données proviennent d'un premier service de données identifié par un premier identificateur de service, l'application source étant configurée pour fonctionner dans différents modes de service associés à différents identificateurs de service ;
déterminer si le mode de fonctionnement actuel de l'application source est un premier mode de fonctionnement associé au premier identificateur de service et à un système de serveurs qui fournit le premier service de données ;
sur la base de la détermination, transférer les données et le premier identificateur de service à la zone de données du presse-papier, de sorte à ce que le premier identificateur de service soit associé aux données se trouvant dans la zone de données du presse-papier ;
recevoir une demande de transfert depuis la zone de données du presse-papier à une application de destination ;
déterminer si le mode de fonctionnement actuel de l'application de destination est un deuxième mode de fonctionnement associé à un deuxième identificateur de service et à un système de serveurs qui fournit un deuxième service de données, la détermination comportant un cadre de contrôle d'accès de l'appareil mobile validant un mode de fonctionnement signalé par l'application de destination par rapport aux paramètres d'autorisation actuels de l'application de destination et l'ajustement du mode de fonctionnement actuel de l'application de destination basé sur les paramètres d'autorisation actuels de l'application de destination en cas d'échec de la validation, l'adaptation incluant la modification du deuxième identificateur de service de manière à ce qu'il corresponde au mode de fonctionnement ajusté de l'application de destination ; et
sur la base du deuxième identificateur de service modifié ne correspondant pas au premier identificateur de service, empêcher le transfert des données depuis la zone de données du presse-papiers à l'application de destination.

2. Procédé selon la revendication 1, comprenant en outre les étapes consistant à :
déterrminer si l'application source fonctionne en un mode de service différent du mode de service associé aux données ; et
attribuer à l'application source un mode de service identique à celui attribué aux données.

3. Procédé selon la revendication 1, comprenant en outre les étapes consistant à :
identifier un troisième identificateur de service affecté à un mode de service de l'application source, dans lequel le mode de service est associé à un troisième service de données fourni par l'intermédiaire du dispositif mobile ; et
appliquer un ou plusieurs paramètres de transfert de données associés aux premier identificateur de service au troisième identificateur de service sur la base du fait que le troisième identificateur de service ne correspond pas au premier identificateur de service.

4. Procédé selon la revendication 1, dans lequel les différents modes de service comprennent un premier mode d'entreprise associé à un premier identificateur de service d'entreprise, un deuxième mode d'entreprise différent du premier mode d'entreprise et associé à un deuxième identificateur de service d'entreprise et un mode personnel associé à un identificateur de service personnel.

5. Procédé selon la revendication 1, comprenant en outre la réception d'un ou de plusieurs paramètres de transfert de données depuis le premier serveur.

6. Procédé selon la revendication 1, dans lequel l'application source comprend au moins une application de calendrier, une application de courrier électronique, une application de messagerie ou une application de notification.

7. Procédé selon la revendication 1, comprenant en outre l'interrogation de l'application source pour le premier mode de service, et la réception d'un mode de service signalé depuis l'application source.

8. Procédé selon la revendication 7, comprenant en outre l'accès aux informations d'autorisation associées à l'application source et la détermination de la question à savoir si le service signalé est autorisé par les informations d'autorisation.

9. Procédé selon la revendication 1, dans lequel l'application de destination est la même que l'application d'origine.

10. Dispositif, comprenant :
un ou plusieurs processeurs configurés pour :
recevoir une demande de transfert de données depuis une application source configurée pour fonctionner sur un appareil mobile à une zone de données du presse-papier, dans le cadre de laquelle les données proviennent d'un premier service de données identifié par un premier identificateur de service, l'application source étant configurée pour fonctionner dans différents modes de service associés à différents identificateurs de service ;
déterminer si le mode de fonctionnement actuel de l'application source est un premier mode de fonctionnement qui est associé au premier identificateur de service et à un système de serveurs qui fournit le premier service de données ;
sur la base de cette détermination, transférer les données et le premier identificateur de service à la zone de données du presse-papier de sorte à ce que le premier identificateur de service soit associé aux données de la zone de données du presse-papier ;
recevoir une demande de transfert des données de la zone de données du presse-papier à une application de destination ;
déterminer si le mode de fonctionnement actuel de l'application de destination est un deuxième mode de fonctionnement qui est associé à un deuxième identificateur de service et à un système de serveurs qui fournit un deuxième service de données, la détermination comportant un cadre de contrôle d'accès du dispositif mobile validant un mode de fonctionnement signalé par l'application de destination par rapport aux paramètres d'autorisation actuels de l'application de destination et ajuster le mode de fonctionnement actuel de l'application de destination sur la base des paramètres d'autorisation actuels de l'application de destination au cas où la validation échouerait, l'ajustement comprenant la modification du deuxième identificateur de service de manière à ce qu'il corresponde au mode de fonctionnement ajusté de l'application de destination ; et
empêcher le transfert de données de la zone de données du presse-papier à la zone de l'application de destination sur la base du deuxième identificateur de service ne correspondant pas au premier identificateur de service.

11. Dispositif selon la revendication 10, le ou les processeurs étant en outre configurés pour :
déterminer si l'application source fonctionne en un mode de service différent du mode de service associé aux données ; et
attribuer à l'application source un mode de service identique à celui attribué aux données.

12. Dispositif selon la revendication 10, dans lequel le ou les processeurs sont en outre configurés pour :
identifier un troisième identificateur de service attribué à un mode de service de l'application source, dans lequel le mode de service est associé à un troisième service de données fourni via le dispositif mobile ; et
appliquer un ou plusieurs paramètres de transfert de données associés au premier identificateur de service au troisième identificateur de service sur la base du fait que le troisième identificateur de service ne correspond pas au premier identificateur de service.

13. Dispositif selon la revendication 10, dans lequel les différents modes de service comprennent un premier mode d'entreprise associé à un premier identificateur de service d'entreprise, un deuxième mode d'entreprise différent du premier mode d'entreprise et associé à un deuxième identificateur de service d'entreprise et un mode personnel associé à un identificateur de service personnel.

14. Dispositif selon la revendication 10, le ou les processeurs étant en outre configurés pour recevoir un ou plusieurs paramètres de transfert de données du premier serveur.

15. Dispositif selon la revendication 10, dans lequel l'application source comprend au moins une parmi une application de calendrier, une application de courrier électronique, une application de messagerie ou une application de notification.

16. Produit de programme informatique codé sur un support de stockage tangible et non transitoire, le produit de programme informatique comprenant des instructions lisibles par ordinateur pour amener un ou plusieurs processeurs à effectuer des opérations exécutant le procédé de l'une quelconque des revendications 1 à 9.
